# EUROPEAN PATENT APPLICATION

(11) **EP 3 098 702 A1**
(43) Date of publication of application: **30.11.2016**
(21) Application number: 16168482.4
(22) Date of filing: 05.05.2016
(51) Int. Cl.: G06F 3/0488, G06F 3/14, G06F 3/01, G06F 3/0482, G06F 3/0485, H04N 21/422

(54) **USER TERMINAL APPARATUS AND CONTROL METHOD THEREOF**

(30) Priority: 27.05.2015 KR 20150074277
(71) Applicant: Samsung Electronics Co., Ltd., Gyeonggi-do 16677 (KR)
(72) Inventor: KOH, Na-young, Seoul (KR); PHANG, Joon-ho, Seoul (KR); NAOUR, Jean-Christophe, Gyeonggi-do (KR); LEE, Kwan-min, Seoul (KR)
(74) Representative: Hewett, Jonathan Michael Richard

(57) **Abstract**

A user terminal apparatus for controlling a display apparatus where the user terminal apparatus includes a communicator configured to perform communication with the display apparatus, a first inputter provided on one surface of the user terminal apparatus, and configured to receive input of a user command for controlling a basic function of the display apparatus, a second inputter provided on another surface of the user terminal apparatus, and configured to display a User Interface through a touch screen, and a processor configured to provide information corresponding to a context of the user terminal apparatus through the touch screen.

## Description

The present invention relates to a user terminal apparatus and a control method thereof, and more particularly, to a user terminal apparatus provided with a remote control function, and a control method thereof.

Due to the development of electronic technologies, various types of display apparatuses are being developed. Especially, display apparatuses such as a TV, PC, laptop computer, tablet PC, mobile phone, and MP3 player and the like are so widely used that almost every household has at least one of them.

Recently, in order to live up to users' needs for more novel and various functions, efforts are being made to develop a more novel kind of display apparatus.

As part of such an effort, a remote control apparatus that includes a UI through which a user may quickly approach various contents being provided from a display apparatus is being developed and used in various fields.

However, such a user terminal apparatus falls short of satisfying the various needs of users who want to quickly approach the massive contents that include various contents such as web-based contents and social contents and the like.

Additional aspects and/or advantages will be set forth in part in the description which follows and, in part, will be apparent from the description, or may be learned by practice of the embodiments.

A purpose of the present invention is to resolve the aforementioned problems of prior art, that is to provide a user terminal apparatus configured to provide a basic control UI on one surface and to provide additional information suitable to a situation on another surface, so that a user may quickly approach a content that he/she wants, and a control method thereof.

According to an embodiment of the present invention, there is provided an user terminal apparatus for controlling a display apparatus, the apparatus including a communicator configured to perform communication with the display apparatus; a first inputter provided on one surface of the user terminal apparatus, and configured to receive input of a user command for controlling a basic function of the display apparatus; a second inputter provided on another surface of the user terminal apparatus, and configured to display a UI (User Interface) through a touch screen; and a processor configured to provide information corresponding to a context of the user terminal apparatus through the touch screen.

The first inputter may be provided with a touch screen that includes a basic UI for controlling the basic function of the display apparatus.

The first inputter may be provided with a PUI (Physical User Interface) that includes at least one physical button for controlling the basic function of the display apparatus.

The context of the user terminal apparatus may include at least one of a situation of a certain menu being selected, a situation of a certain signal being received in the display apparatus, and a situation of the user terminal apparatus being flipped.

The processor may control at least one activation state of the first inputter and second inputter based on a context of the user terminal apparatus being flipped.

The processor, in response to receiving a signal corresponding to a context of the display apparatus, may provide information corresponding to the context of the display apparatus through the touch screen.

The processor, in response to being at a situation of the display apparatus displaying content, may display additional information on the content through the touch screen, and in response to being at a situation of the display apparatus to receive input of a character, may display a UI for inputting the character through the touch screen.

The processor may provide a UI screen that includes at least one GUI for directly replaying at least one content according to a predetermined event, and the UI screen including the GUI of a predetermined format sequentially arranged based on a usage frequency of the at least one content.

The processor, in response to the user manipulation of selecting a GUI being a short press input, may directly display a content corresponding to the selected GUI, and in response to the user manipulation of selecting a GUI being a long press input, may provide a menu related to the content corresponding to the selected GUI.

The processor may scroll the UI screen in a predetermined direction according to a predetermined touch interaction and displays the UI screen, and additionally display at least one GUI not displayed on the UI screen on the touch screen according to the predetermined event.

According to an embodiment of the present invention, there is provided a control method of a user terminal apparatus for controlling a display apparatus including a communicator configured to perform communication with the display apparatus, a first inputter provided on one surface of the user terminal apparatus and configured to receive input of a user command for controlling a basic function of the display apparatus, a second inputter provided on another surface of the user terminal apparatus and configured to display a UI (User Interface) through a touch screen, the method including determining a context of the user terminal apparatus; and providing information corresponding to a context of the user terminal apparatus through the touch screen.

The first inputter may be provided with a touch screen that includes a basic UI for controlling the basic function of the display apparatus.

The first inputter may be provided with a PUI (Physical User Interface) that includes at least one physical button for controlling the basic function of the display apparatus.

The context of the user terminal apparatus may include at least one of a situation of a certain menu being selected, a situation of a certain signal being received in the display apparatus, and a situation of the user terminal apparatus being flipped.

The method may further include controlling at least one activation state of the first inputter and second inputter based on a context of the user terminal apparatus being flipped.

The providing information corresponding to a context of the user terminal apparatus through the touch screen may involve providing information corresponding to the context of the display apparatus, in response to receiving a signal corresponding to the context of the display apparatus.

The providing information corresponding to a context of the user terminal apparatus through the touch screen may involve, in response to being at a situation of the display apparatus displaying a content, displaying additional information on the content through the touch screen, and in response to being at a situation of the display apparatus to receive input of a character, displaying a UI for inputting the character through the touch screen.

The providing information corresponding to a context of the user terminal apparatus through the touch screen may involve providing a UI screen that includes at least one GUI for directly replaying at least one content according to a predetermined event, and the UI screen including the GUI of a predetermined format sequentially arranged based on a usage frequency of the at least one content.

The method may further include, in response to the user manipulation of selecting a GUI being a short press input, directly replaying a content corresponding to the selected GUI, and in response to the user manipulation of selecting a GUI being a long press input, providing a menu related to the content corresponding to the selected GUI.

The method may further include scrolling the UI screen in a predetermined direction according to a predetermined touch interaction and displaying the UI screen, and additionally displaying at least one GUI not displayed on the UI screen on the touch screen according to the predetermined event.

According to an embodiment of the present invention, there is provided a non-transitory computer readable medium storing a control method, the control method of a user terminal apparatus for controlling a display apparatus comprising a communicator configured to perform communication with the display apparatus, a first inputter provided on one surface of the user terminal apparatus and configured to receive input of a user command for controlling a basic function of the display apparatus, a second inputter provided on another surface of the user terminal apparatus and configured to display another surface UI (User Interface) through a touch screen, the method including determining a context of the user terminal apparatus and providing information corresponding to the context of the user terminal apparatus through the touch screen.

According to an embodiment of the present invention, there is provided a user terminal for controlling a display, the terminal including a first input unit on a first surface of the terminal to input a user command, a touch sensitive display on second surface of the terminal and configured to provide a graphical user interface (GUI) through which a user interacts with the display and a processor to provide context information to the user via the GUI.

As aforementioned, according to the present invention, it is possible to provide a basic control UI on one surface, and provide additional information suitable to a situation on another surface, thereby enabling a user to quickly approach a content that he/she wants to increase user convenience.

The above and/or other aspects will be more apparent by describing certain exemplary embodiments with reference to the accompanying drawings, in which:
FIG. 1 is a view for explaining an example of a user terminal apparatus according to an embodiment of the present invention;
FIGs. 2A and 2B are block diagrams illustrating a configuration of a user terminal apparatus for controlling a display apparatus according to various embodiments of the present invention;
FIGs. 3A to 3F are views for explaining a structure of a user terminal apparatus according to an embodiment of the present invention;
FIGs. 4A and 4B are views for explaining a structure of a first inputter of a user terminal apparatus according to an embodiment of the present invention;
FIGs. 5A and 5B are views for explaining an operation of a user terminal apparatus according to an embodiment of the present invention;
FIGs. 6A and 6B are views for explaining an operation of a user terminal apparatus according to an embodiment of the present invention;
FIGs. 7A to 7C are views for explaining an operation of a user terminal apparatus according to an embodiment of the present invention;
FIG. 8 is a view for explaining an operation of a user terminal apparatus according to an embodiment of the present invention;
FIGs. 9A and 9C are views for explaining an operation of a user terminal apparatus according to an embodiment of the present invention; and
FIG. 10 is a flowchart for explaining a method for controlling a user terminal apparatus according to an embodiment of the present invention.

Reference will now be made in detail to the embodiments, examples of which are illustrated in the accompanying drawings, wherein like reference numerals refer to the like elements throughout. The embodiments are described below referring to the figures.

Certain exemplary embodiments will now be described in greater detail with reference to the accompanying drawings.

In the following description, same drawing reference numerals are used for the same elements even in different drawings. The matters defined in the description, such as detailed construction and elements, are provided to assist in a comprehensive understanding. Thus, it is apparent that the exemplary embodiments can be carried out without those specifically defined matters. Also, well-known functions or constructions are not described in detail since they would obscure the description with unnecessary detail.

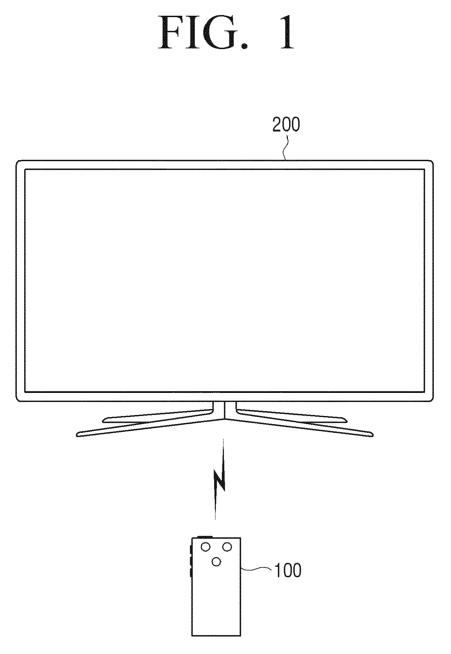

FIG. 1 is a view for explaining an example of a display system according to an embodiment of the present invention.

According to FIG. 1, the display system according to an embodiment of the present invention includes a user terminal apparatus 100 and display apparatus 200.

The user terminal apparatus 100 may be realized in one of various formats such as a mobile phone or cell phone, PMP, PDA, notebook, and the like.

More specifically, the user terminal apparatus 100 may be realized as a touch-based portable terminal format apparatus capable of displaying a UI screen and controlling the displayed UI screen by a touch interaction. In this case, the user terminal apparatus 100 may be realized as an apparatus that has a touch screen. Accordingly, the user terminal apparatus 100 may be realized such that it has a touch screen so that a program may be executed using a finger or pen (for example, a stylus pen). Furthermore, the user terminal apparatus 100 serves a function of providing on the touch screen a UI (User Interface) screen for controlling the display apparatus 200, and transmitting a signal corresponding to a user touch manipulation to the display apparatus 200. For this purpose, the user terminal apparatus 100 may be realized to include a touch sensor configured to receive a user command of one of various formats or an OJ (Optical Joystick) sensor that uses optic technology.

In some cases, the user terminal apparatus 100 may be realized in one of various formats to sense a movement of the user terminal apparatus 100 and transmit a signal corresponding to the movement, to recognize a voice and transmit a signal corresponding to the recognized voice, or to transmit a signal corresponding to an input key. For this purpose, the user terminal apparatus 100 may be realized to further include a motion sensor, microphone, or physical button (for example, a Tactile Switch) and the like.

As illustrated in FIG. 1, the display apparatus 200 may be realized as a digital TV, but without limitation, and thus it may be realized as one of various types of apparatuses provided with a display function such as a PC (Personal Computer), Navigation, Kiosk, DID (Digital Information Display) and the like. In some cases, the display apparatus 200 may be realized as an apparatus not provided with a display function as long as it is controllable by the user terminal apparatus 100.

Meanwhile, the user terminal apparatus 100 according to the present invention may be provided with a user interface on both surfaces thereof, one surface providing a basic control UI, and the other surface providing additional information suitable to a situation. Various embodiments of the present invention will be explained in further detail hereinafter with reference to the drawings attached.

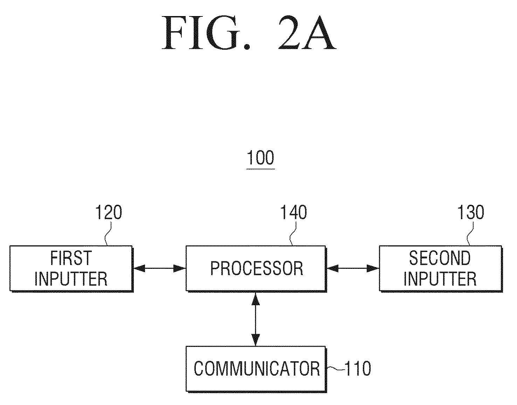

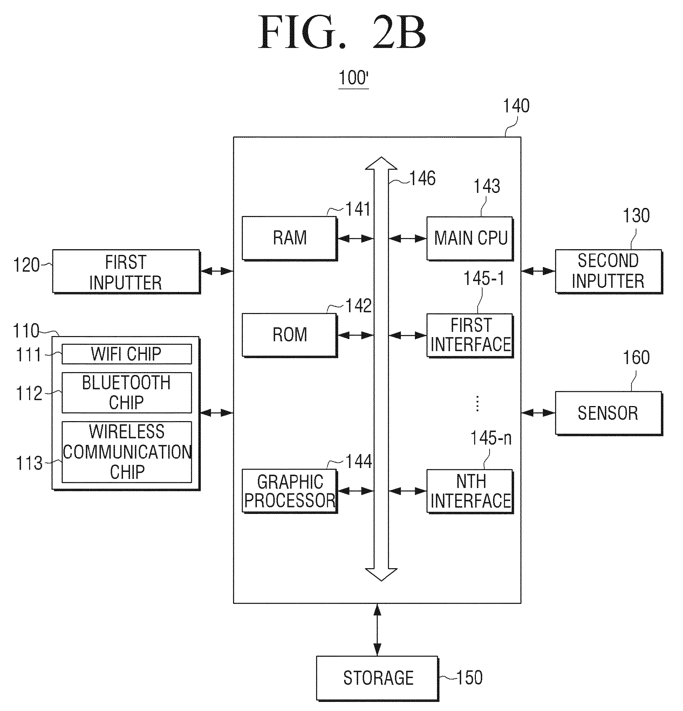

FIGs. 2A and 2B are block diagrams illustrating a configuration of the user terminal apparatus 100 for controlling the display apparatus 200 according to various embodiments of the present invention.

According to FIG. 2A, the user terminal apparatus 100 includes a communicator 110, first inputter 120, second inputter 130, and processor 140, such as a computer.

The communicator 110 performs communication with the display apparatus (FIG. 1, 200).

Herein, the communicator 110 may perform communication with the display apparatus 200 or external server (not illustrated) through various communication methods such as a BT (BlueTooth), WI-FI (Wireless Fidelity), Zigbee, IR (Infrared), Serial Interface, USB (Universal Serial Bus), and NFC (Near Field Communication).

More specifically, in response to a predetermined event occurring, the communicator 110 may perform communication with the display apparatus 200 in a predefined communication method, and fall into an interlocked state. Herein, an interlocked operation may mean any one of a state where communication can be made such as an operation where communication between the user terminal apparatus 100 and display apparatus 200 is initialized, an operation where a network is formed, or an operation where a device pairing is performed. For example, device identification information of the user terminal apparatus 100 may be provided to the display apparatus 200, and accordingly, a pairing procedure between the two devices may be performed. For example, in response to a predetermined event occurring in the user terminal apparatus 100, a peripheral device may be searched through the DLNA (Digital Living Network Alliance) technology, and a pairing may be performed with the searched device and fall into an interlocked state.

Herein, a predetermined event may occur in at least one of the user terminal apparatus 100 and display apparatus 200. For example, a user command of the user terminal apparatus 100 selecting the display apparatus 200 as a subject of control being input, or the power of the display apparatus 200 being turned on may be a predetermined event.

The first inputter 120 may be provided on one surface of the user terminal apparatus 100, and may receive a user command for controlling a basic function of the display apparatus 200.

More specifically, the first inputter 120 may be realized in a format that includes a touch screen having a basic UI for controlling the basic functions of the display apparatus 200, or in a format having a PUI (physical user interface) that includes at least one physical button for controlling the basic functions of the display apparatus 200.

Herein, the basic UI for controlling the basic functions of the display apparatus 200 may include at least one of a channel up/down button, volume adjusting button, and info (information) button for providing predetermined information.

According to an embodiment, the UI may be realized as a PUI that includes at least one physical button of the channel up/down button, volume adjusting button, and info button. Otherwise, according to another embodiment, the UI may be realized in a format that includes at least one GUI (graphical user interface) of the channel up/down button, volume adjusting button, and info button, in which case, the first inputter 120 may be realized as a touch screen that displays the GUIs, and receives a user's touch input regarding the GUIs.

Meanwhile, in the aforementioned embodiment, it was explained that the channel up/down button, volume adjusting button, and info button are included in the basic UI for controlling the basic functions of the display apparatus 200, but this is a mere embodiment, and thus any button related to the basic functions of the display apparatus 200 is applicable without limitation.

The second inputter 130 is provided on the other surface of the user terminal apparatus 100, and displays a UI (User Interface) through the touch screen.

More specifically, the second inputter 130 may provide, on the touch screen, a menu screen for selecting various functions that may be provided in the display apparatus 200, and a UI screen for selecting various modes. Herein, the UI screen may include a screen for replaying various contents such as an image, video, text, and music as well as channels, an application execution screen that includes various contents, web browser screen, and GUI (Graphic or Graphical User Interface) screen and the like.

Meanwhile, the touch screen provided in the first inputter 120 and second inputter 130 may be realized as an LCD (Liquid Crystal Display Panel), OLED (Organic Light Emitting Diodes), but without limitation. Furthermore, when provided in the first inputter 120 or second inputter 130, the touch screen may be realized as a flexible display or transparent display and the like.

The processor 140 controls the overall operations of the user terminal apparatus 100.

The processor 140 provides information corresponding to the context of the user terminal apparatus 100 through the touch screen provided in the second inputter 130. Herein, the context of the user terminal apparatus 100 may include at least one situation of a situation where a certain menu or certain button is being selected from the user terminal apparatus 100, a situation where a certain signal is being received from outside the user terminal apparatus 100 (for example, display apparatus 200), and a situation where the user terminal apparatus 100 is being flipped. More specifically, in the case of a situation where a certain menu or certain button is being selected, in response to the info button being selected in the user terminal apparatus 100, the processor 140 may output detailed explanation related to the contents being replayed in the display apparatus 200 on the touch screen provided in the second inputter 130, or in response to a QUERTY menu being selected, output a QUERTY keyboard being output in the display apparatus 200 to the second inputter 130, or in response to the function menu being selected, output various menus related to the function of the display apparatus 200.

Meanwhile, regarding the situation where a certain signal is being received from outside the user terminal apparatus 100, the processor 140 may output a corresponding UI on the touch screen provided in the second inputter 130 based on the state information regarding the context of the display apparatus 200. Herein, the context of the display apparatus 200 indicates a situation where a control is required, and thus may have a meaning including various states and situations such as a function provided in the display apparatus 200, type of content being provided, image panel being provided, and display state and the like.

More specifically, in response to entering at least one mode of a broadcast viewing mode of viewing broadcast channels in real time, a contents replay mode of replaying VOD contents, a menu providing mode, a game mode, and a web mode, or in response to receiving state information that it is in the corresponding mode, the processor 140 may provide a UI corresponding to the mode to the touch screen provided in the second inputter.

Furthermore, in response to receiving state information that it is at a state of executing a detailed function of providing a certain mode even in a certain mode, the processor 140 may provide the UI corresponding to the corresponding detailed function on the touch screen provided in the second inputter 130. For example, in response to the display apparatus 200 being at a volume adjusting state in the broadcast viewing mode, or in response to receiving a signal according to a case where volume adjustment is necessary, the processor 140 may provide the corresponding UI on the touch screen provided in the second inputter 130. For example, in response to the display apparatus 200 being at a mute state, the processor 140 may provide the UI for volume adjustment to the touch screen provided in the second inputter 130.

Meanwhile, the processor 140 may receive information on the UI screen corresponding to the state of the display apparatus 200 and control information corresponding to the UI information from an external server(not illustrated), and provide the corresponding UI based on the received information. For example, in a case of providing an SNS screen from the user terminal apparatus 100 according to a user's command, the processor may receive the corresponding information from the external server (not illustrated). In this case, the external server (not illustrated) may be connected to the Internet via a network, and may update information on the user terminal apparatus 100 and display apparatus 200. For example, the external service may update device driver information, control information and UI information and the like.

Meanwhile, the processor 140 may control an activation state of at least one of the first inputter 120 and second inputter 130 based on the context where the user terminal apparatus 100 is being flipped.

For example, in response to determining that the first inputter 120 has been flipped such that it is within the user's view, the processor 140 turns on the touch screen provided in the first inputter 120, and turn off the touch screen provided in the second inputter 130. On the contrary, in response to determining that the second inputter 130 has been flipped such that it is within the user's view, the processor 140 may turn on the touch screen provided in the second inputter 130, and turn off the touch screen provided in the first inputter 120.

More specifically, in response to determining that a grip state has been changed to grip a surface that the second inputter 130 provides with a surface provided by the first inputter 120 being gripped, or in response to determining that a grip state has been changed to grip a surface that the second inputter 130 provides being gripped, the processor 140 may recognize it has an operation of flipping. Such a gripping operation may be recognized through various sensors. For example, in response to sensing a user touch through a touch sensor provided in at least one of both surfaces and front and rear surfaces of the user terminal apparatus 100, the processor 140 may recognize that there is a grip operation.

Meanwhile, in response to sensing at least one of a rotation and inclination through at least one of a gyro sensor and acceleration sensor provided in the user terminal apparatus 100, the processor 140 may recognize that there is a flip operation.

Otherwise, the processor 140 may recognize a direction where the user is located through a camera sensor and recognize that there is a flip operation.

As aforementioned, by providing a different UI or GUI through the first inputter 120 and second inputter 130, it is possible to improve user convenience. For example, in response to the user leaning back in a sofa or bed or being in a comfortable position (Lean Back), the user may be viewing a content being executed in the display apparatus 200 for a long period of time, or zapping a content being provided in the display apparatus 200, in which case the user may generally manipulate the display apparatus 200 in a simple method, and thus the user may control the display apparatus 200 conveniently through the first inputter 110 as aforementioned. Furthermore, when the user wishes to control detailed functions of the display apparatus 200, the user may simply flip the user terminal apparatus 100, and easily control the display apparatus 200 through various UIs provided through the touch screen of the second inputter 130. That is, it is possible to provide a suitable UI according to a situation of the display apparatus 200, a situation of the user terminal apparatus 100, and a situation of control by the user.

FIG. 2B is a block diagram illustrating in detail the configuration of the user terminal apparatus according to another embodiment of the present invention. According to FIG. 2b, the user terminal apparatus 100' includes a communicator 110, first inputter 120, second inputter 130, processor 140, storage 150, and sensor 160. Detailed explanation on the components of FIG. 2b that overlap the components already illustrated in FIG. 2A will be omitted.

The processor 140 controls the overall operations of the user terminal apparatus 100' using various programs stored in the storage 150.

Specifically, the processor 140 includes a RAM 141, ROM 142, main CPU 143, graphic processor 144, a first to nth interfaces 145-1 ∼ 145-n, and bus 146.

The RAM 141, ROM 142, main CPU 143, graphic processor 144, and first to nth interfaces 145-1 ∼ 145-n may be connected to one another through a bus 146.

The first to nth interfaces 145-1 ∼ 145-n are connected to various aforementioned components. One of the interfaces may be a network interface connected to an external apparatus through the network.

The main CPU 143 accesses the storage 150, and performs booting using an O/S stored in the storage 150. Furthermore, the main CPU 143 performs various operations using various programs, contents, and data stored in the storage 150.

In the ROM 142, command sets for booting the system are stored. In response to a turn on command being input and power being supplied, the main CPU 143 copies the O/S stored in the storage 150 to the RAM 141 according to the command stored in the ROM 142, and executes the O/S to boot the system. When the booting is completed, the main CPU 143 copies various application programs stored in the storage 150 to the RAM 141, and executes the application programs copied to the RAM 141 to perform various operations.

The graphic processor 144 generates a screen that includes various objects such as an icon, image, and text using an operator (not illustrated) and renderer (not illustrated). The operator (not illustrated) computes attribute values such as a coordinate value, shape, size, and color of each object to be displayed according to a layout of the screen based on the received control command. The renderer (not illustrated) generates a screen of various layouts including objects based on the attribute value computed in the operator (not illustrated). The screen generated in the renderer (not illustrated) is displayed within a display area of the first inputter 120 and second inputter 130.

Meanwhile, the aforementioned operations of the processor 140 may be performed by the programs stored in the storage 150.

The storage 150 may store an O/S (Operating System) software modules for driving the user terminal apparatus 100', and various data such as various multimedia contents.

Especially, according to an embodiment of the present invention, the storage 150 may store data for configuring various UI screens provided in the display area of the first inputter 120 and second inputter 130.

Furthermore, the storage 150 may store data for generating a control signal corresponding to a user command being input through the various UI screens.

The sensor 160 includes a touch sensor, geomagnetic sensor, gyro sensor, acceleration sensor, proximity sensor, and grip sensor. The sensor 160 may sense various manipulations such as a rotation, inclination, pressure, approach, and grip besides the aforementioned touch. For example, the user terminal apparatus 100' may be arranged on a rear surface, circumference, or handle part, besides the touch sensor provided on the touch screen, and sense a grip by the user. The grip sensor may be realized as a pressure sensor besides the touch sensor.

Otherwise, the user terminal apparatus 100' may further include an audio processor(not illustrated) configured to process audio data, a video processor(not illustrated) configured to process video data, speaker(not illustrated) configured to output not only various audio data processed in the audio processor(not illustrated) but also various alarm sounds and voice messages, and a microphone(not illustrated) configured to receive users' voice or other sounds and to convert the same into audio data.

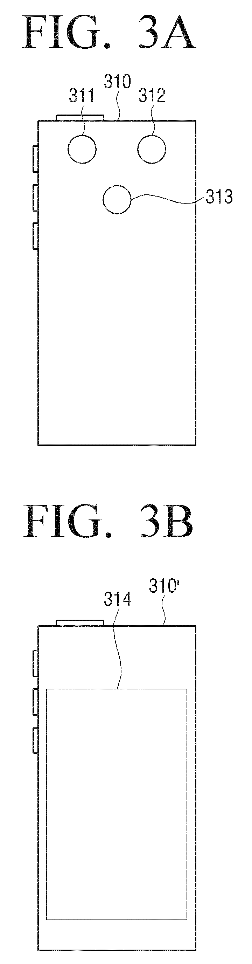

FIGs. 3A to 3F are views for explaining a structure of the user terminal apparatus 100 according to an embodiment of the present invention.

FIGs. 3A and 3B are views for explaining a structure of a first inputter 310 of the user terminal apparatus 100 according to an embodiment of the present invention.

According to an embodiment, the first inputter 310 may have a PUI (Physical User Interface) that includes at least one physical button for controlling basic functions of the display apparatus 200. For example, as illustrated in FIG. 3A, the first inputter 310 may have simply physical buttons. In FIG. 3A, each button may be realized as a channel up/down button 311, 312, or info 313 button, but without limitation.

According to another embodiment, the first inputter 310 may have a touch screen 314 that includes a basic UI for controlling the basic functions of the display apparatus 200.

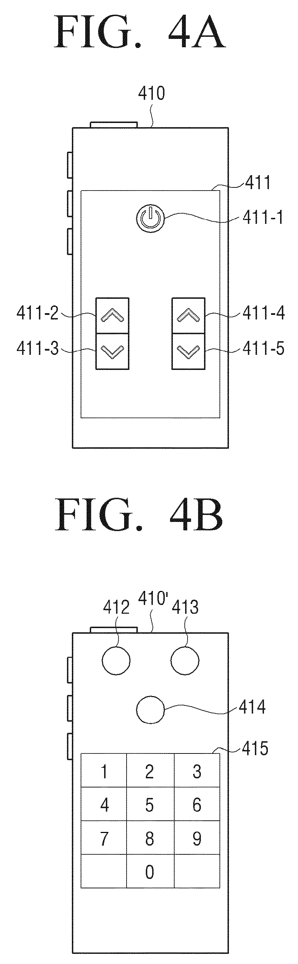

FIGs. 4A and 4B are views for explaining a case provided with the touch screen 314 of the user terminal apparatus 100 according to an embodiment of the present invention.

According to an embodiment, as illustrated in FIG. 4A, in the touch screen 411 provided in the first inputter 410, a basic UI for controlling the basic functions of the display apparatus 200 may be provided. For example, as illustrated, in the basic UI, a GUI 411-1 for turning on/off the display apparatus 200, channel up/down GUI 411-2, 411-3, and volume adjusting GUI 411-4,411-5 may be included, but without limitation.

According to another embodiment, as illustrated in FIG. 4B, the first inputter 410 may be further provided with not only a touch screen 415 for providing the basic UI, but also additional physical buttons 412 to 414.

For example, physical buttons such as a button for turning on/off the display apparatus 200, channel up/down button, and volume adjusting button may be further provided.

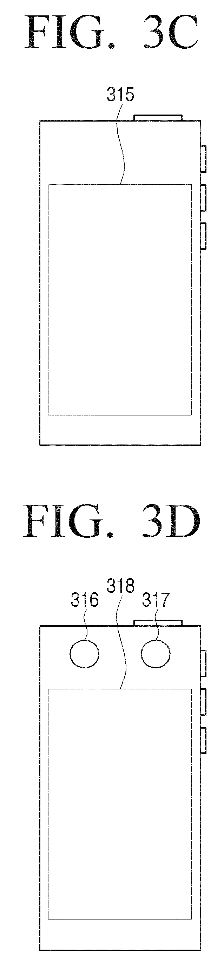

FIGs. 3C and 3D are views for explaining a structure of a second inputter 320 of the user terminal apparatus 310 according to an embodiment of the present invention.

According to an embodiment, the second inputter 320 may be only the touch screen 315 as illustrated in FIG. 3C, but according to another embodiment, the second inputter 320 may also be a combination of at least one physical button 316, 317 and a touch screen 318 as illustrated in FIG. 3D.

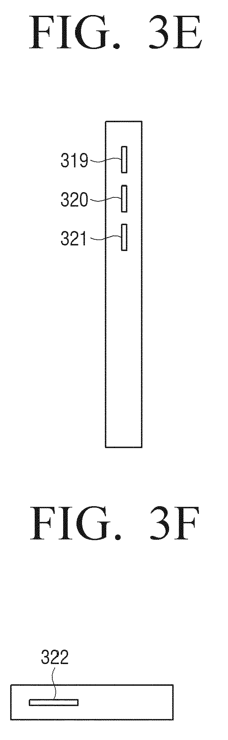

FIGs. 3E and 3F are views for explaining a structure of one side and an upper part of the user terminal apparatus 100 according to an embodiment of the present invention.

According to an embodiment, as illustrated in FIG. 3E, at one side of the user terminal apparatus 100, at least one button may be provided. For example, there may be three buttons including a volume adjusting button and mute button, but without limitation.

According to an embodiment, as illustrated in FIG. 3F, at the upper part of the user terminal apparatus 100, at least one button, for example, an on/off button 322 may be provided, but without limitation.

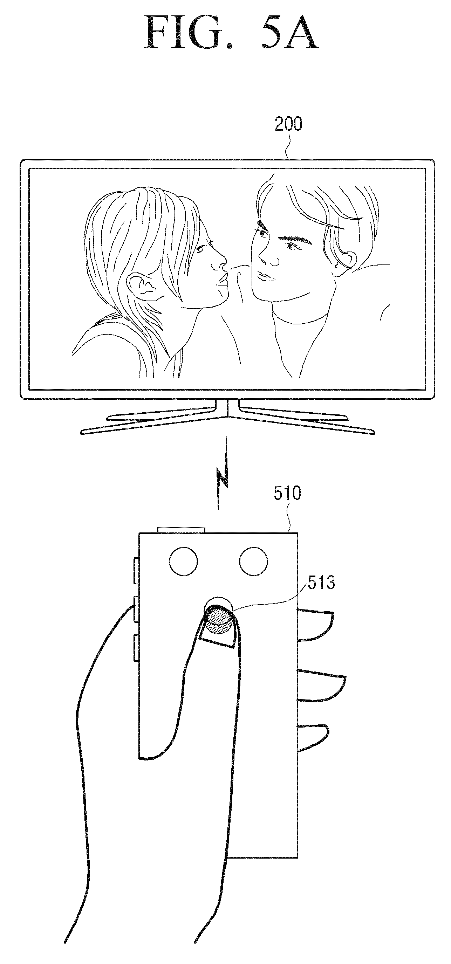

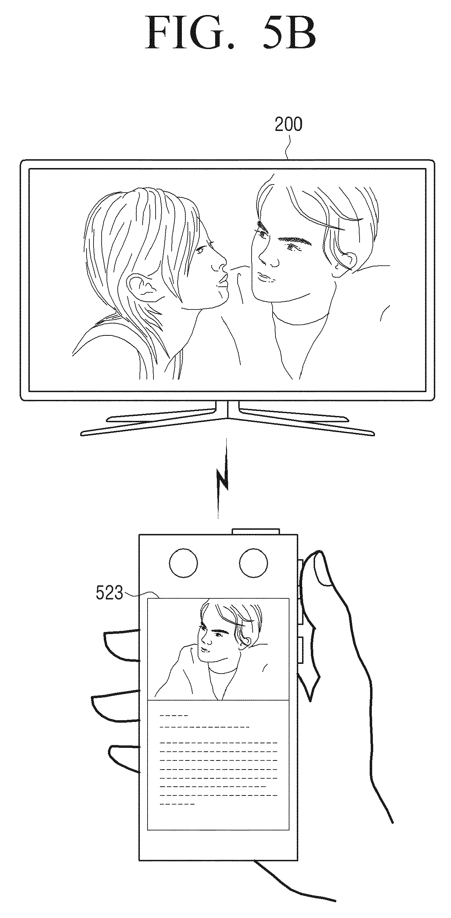

FIGs. 5A and 5B are views for explaining an operation of the user terminal apparatus 100 according to an embodiment of the present invention.

According to an embodiment of the present invention, as illustrated in FIGs. 5A and 5B, in response to an info button 513 provided in the first inputter 510 being press manipulated, information on contents being replayed in the display apparatus 200 may be output to the touch screen 523 provided in the second inputter 520. For example, in response to the info button 513 provided in the first inputter 510 being press manipulated, the user terminal apparatus 100 may request the display apparatus 200 for detailed information on the contents currently being displayed, and in response to receiving the detailed information corresponding to the contents at the request, the user terminal apparatus 100 may display a UI screen based on the received detailed information. In another example, in response to the info button 513 provided in the first inputter 510 being press manipulated, the user terminal apparatus 100 may request the display apparatus 200 for identification information on the contents currently being displayed, and in response to receiving the identification information on the contents at the request, the user terminal apparatus 100 may receive the detailed information on the contents corresponding to the received identification information from the external server(not illustrated) and provide the same.

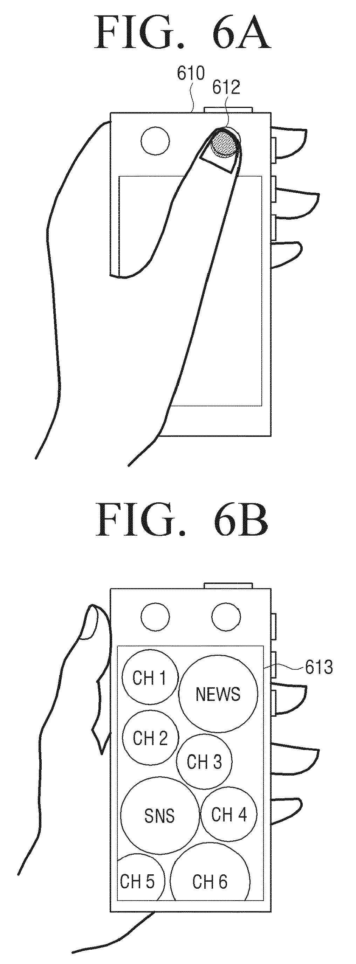

FIGs. 6A and 6B are views for explaining an operation of the user terminal apparatus 100 according to an embodiment of the present invention.

According to an embodiment of the present invention, the processor 140 may provide a UI screen that includes at least one GUI for directly replaying at least one content according to a predetermined event. Herein, the predetermined event may be an event of the user terminal apparatus 100 being rotated or accelerated, an event of a predetermined area of the touch screen provided in the user terminal apparatus 100 being touched, or an event of a predetermined button provided in the user terminal apparatus 100 being input, but without limitation.

For example, as illustrated in FIG. 6A, according to an event of the predetermined button 612 provided in the user terminal apparatus 100 being input, a UI screen may be provided on the touch screen 613 as illustrated in FIG. 6B.

Specifically, the processor 140 may provide a UI screen where a GUI of a predetermined format is sequentially arranged based on a pre-stored contents usage history. Herein, the contents usage history may include a usage frequency of at least one content, and the processor 140 may provide a UI screen where a GUI of a predetermined format corresponding to each content is sequentially arranged based on the usage frequency of the content.

For example, as illustrated in FIG. 6B, it is possible to output a UI screen where a circular format GUIs an sequentially arranged on the touch screen 613 provided in the second input apparatus 610 according to an order determined based on the usage frequency of content. In such a case, the processor 140 may arrange the contents starting from a content of high priority with a high usage frequency to a content of low priority with a low usage frequency. However, in the aforementioned embodiment, it was explained that the GUI has a circular format, but without limitation, and thus the format of the GUI may be any one of various types of a polygonal shape, such as a triangle or square or oval.

As aforementioned, it is possible to provide a GUI for a content that the user uses frequently based on the content usage frequency on the UI first, so that the user may easily search the contents.

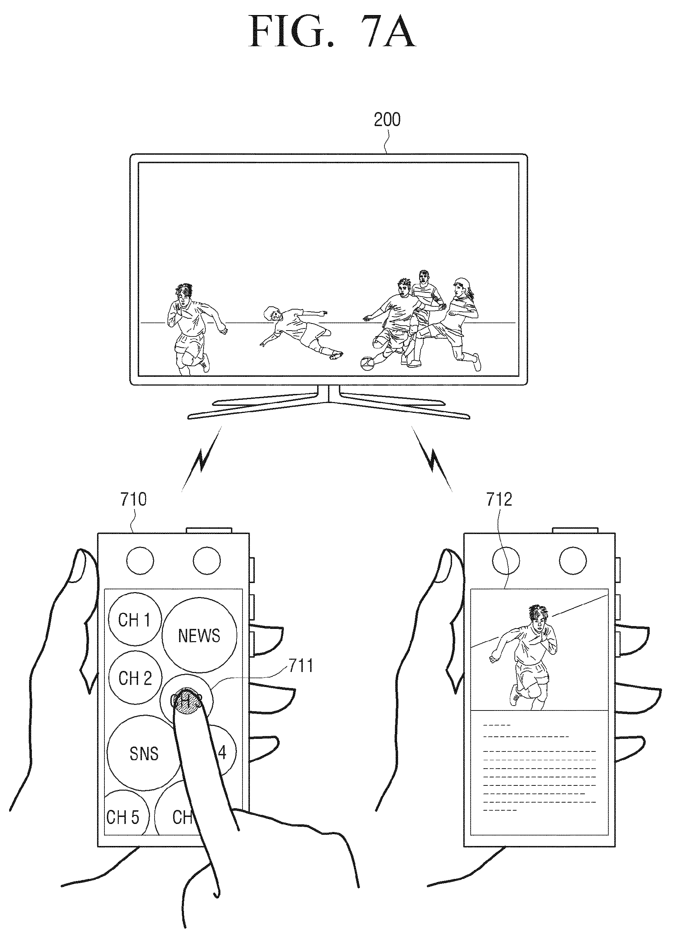

FIGs. 7A to 7C are views for explaining operations of the user terminal apparatus 100 according to an embodiment of the present invention.

According to an embodiment of the present invention, the processor 140 may perform a different function according to a different user manipulation regarding the GUI provided on the UI screen illustrated in FIG. 6A.

Specifically, in response to a user manipulation of selecting a certain GUI being a short press type input, the processor 140 may directly replay the content corresponding to the selected GUI, and in response to a user manipulation of selecting a certain GUI being a long press input, the processor 140 may provide a menu related to the content corresponding to the selected GUI.

For example, as illustrated in FIG. 7A, in response to the user short touching (short press) the GUI 711 corresponding to the sports related content on the touch screen 712 provided in the second inputter 710, the user terminal apparatus 100 may transmit a content execution request signal and detailed information request signal corresponding to the touched content to the display apparatus 200. In such a case, the display apparatus 200 may replay and output the corresponding content according to the content execution request signal, and at the same time, transmit the signal corresponding to the detailed information related to the touched content to the user terminal apparatus 100. The user terminal apparatus 100 outputs the content detailed information corresponding to the received signal to the touch screen 712 provided in the second inputter 710.

In another example, in response to the GUI 711 corresponding to the content being short touched (short press), the user terminal apparatus 100 requests the display apparatus 200 for identification information on the content currently being displayed together with the content execution request signal. Then, in response to receiving the identification information on the content at the request, the user terminal apparatus 100 may receive the detailed information on the content corresponding to the received identification information from an external server (not illustrated) and provide the same.

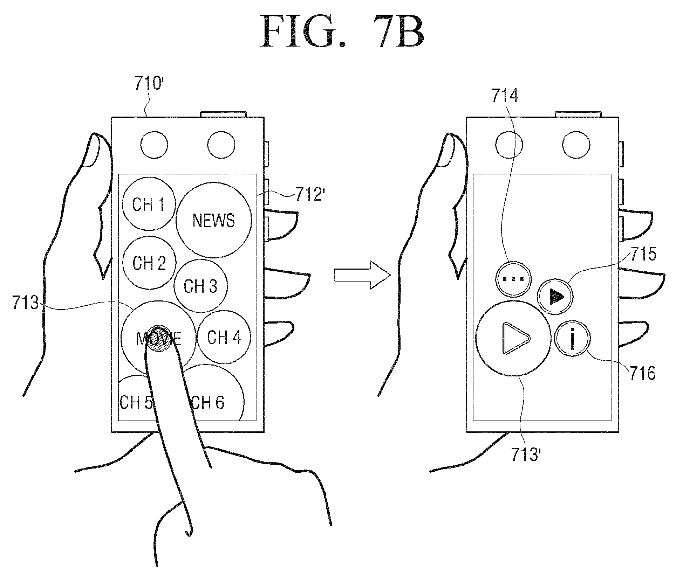

Furthermore, as illustrated in FIG. 7B, in response to a certain GUI 713 on the touch screen 712' provided in the second inputter 710' being long press manipulated (long press), GUIs 714-716 providing various options are displayed near the press manipulated GUI 713'. For example, as illustrated, GUIs such as a GUI 714 for viewing more options, content replay GUI 715, content information providing GUI 716 may be provided, but without limitation.

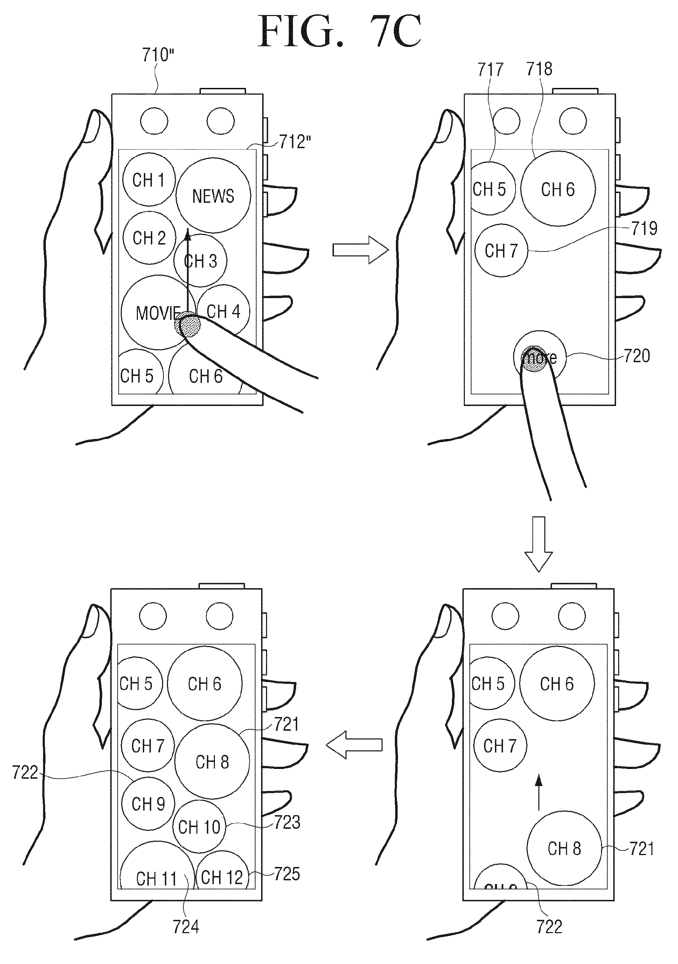

FIG. 7C illustrates operations of the GUIs when the user drags the touch screen 712" provided on the second inputter 710".

According to an embodiment of the present invention, the processor 140 may scroll the UI screen to a predetermined direction and displays the UI (User Interface) screen according to a predetermined touch interaction, and may additionally display at least one GUI (graphical user interface) not displayed on the UI screen on the touch screen according to a predetermined event.

Specifically, as illustrated in FIG. 7C, in response to the user dragging the touch screen 712" upwards, all the GUIs displayed on the touch screen 712" will be dragged upwards. Herein, in response to touching or dragging a certain area 720 on the screen provided as an empty area as all the GUI are dragged upwards, GUIs 721-725 corresponding to the contents determined as low priority contents according to the user's usage frequency and thus not initially displayed as the GUIs will be displayed on one side of the screen. Herein, the displayed GUIs 721-725 may move upwards on the screen and be displayed adjacently to the existing GUIs 171-719. In response to the touch screen 712" being dragged downwards by the user after the GUI corresponding to the low priority contents is added, GUIs displayed on the touch screen 712" may be moved downwards all together. As such, the contents having low usage frequency and thus having low priorities may also be additionally displayed on the screen sequentially at a certain user manipulation and be provided to the user. However, according to another embodiment, in response to there being no certain event on the screen provided as an empty area as all the GUIs on the screen are dragged upwards, GUIs corresponding to low priority contents may be newly provided with only an event of moving the GUIs displayed on the screen upwards.

Meanwhile, in response to a GUI and another GUI meeting each other at their corners, or a GUI meeting a UI portion representing a circumference of the touch screen as the position of the GUIs are moved according to various events in the aforementioned embodiments, the processor 140 may provide an animation effect where GUIs bounce against each other and then stop.

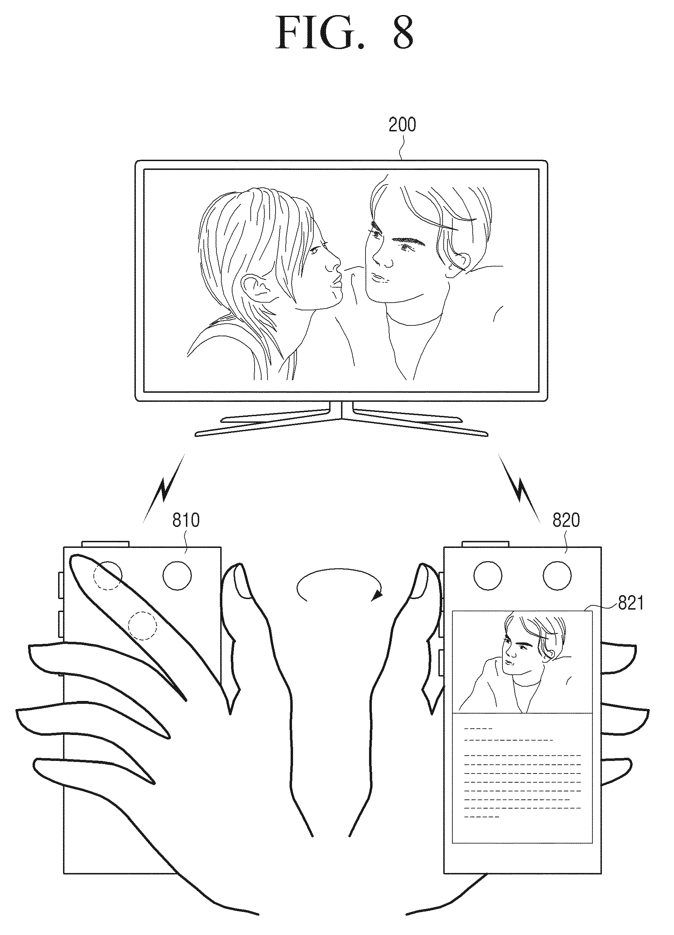

FIG. 8 is a view for explaining operations of the user terminal apparatus 100 according to an embodiment of the present invention.

According to an embodiment of the present invention, the processor 140 may control at least one activated state of the first inputter 810 and second inputter 820 based on a context where the user terminal apparatus 100 is being flipped.

Specifically, referring to FIG. 8, in response to the user terminal apparatus 100 being flipped such that the surface having the first inputter 810 facing the user being flipped such that the surface having the second inputter 810 faces the user with a content being replayed in the display apparatus 200, the touch screen 821 provided in the second inputter 820 of the user terminal apparatus 100 may be activated.

In this case, in response to requesting the display apparatus 200 for detailed information on the content currently being displayed and then receiving the detailed information corresponding to the content at the request, the user terminal apparatus 100 may display a UI screen based on the received detailed information on the activated touch screen 821.

Furthermore, in response to the user terminal apparatus 100 being flipped such that the surface having the second inputter 820 facing the user is flipped such that the surface having the first inputter 810 faces the user, the first inputter 810 may of course be activated.

Meanwhile, activation of the first inputter 810 or second inputter 820 refers to the touch screen provided in each inputter being turned from "off" to "on", but without limitation.

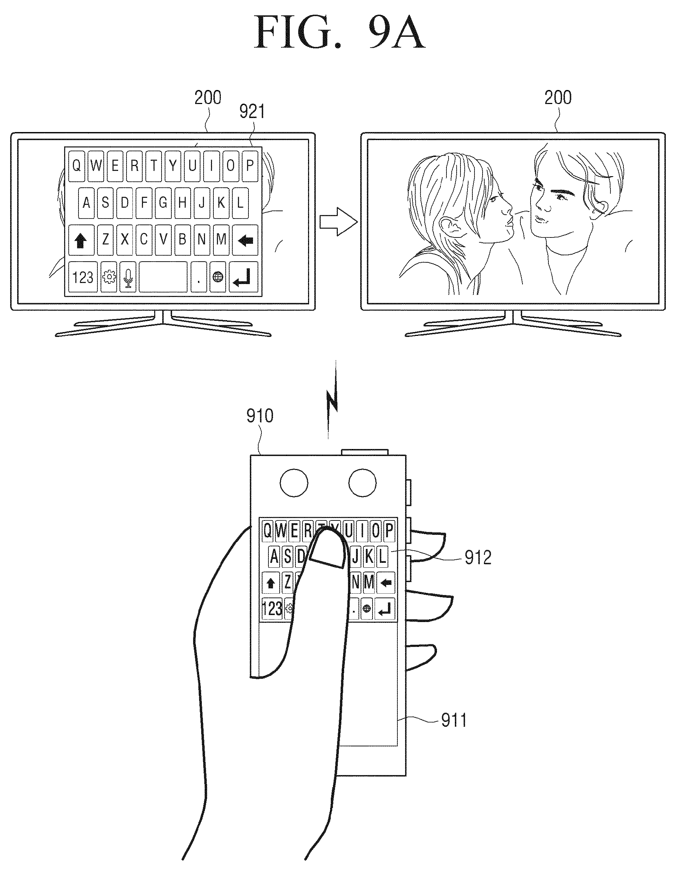

FIGs. 9A to 9C are views for explaining operations of the user terminal apparatus 100 according to an embodiment of the present invention.

According to an embodiment of the present invention, in response to receiving a signal corresponding to a context of the display apparatus 200, the processor 140 may provide information corresponding to the context of the display apparatus 200 through the touch screen. Herein, the context of the display apparatus 200 may be a situation where the display apparatus 200 is being turned on/off, but it may also be a situation of the display apparatus 200 related to various functions that the display apparatus 200 has.

For example, as illustrated in FIG. 9A, with the display apparatus 200 displaying a QWERTY keyboard 921 for inputting characters, the user terminal apparatus 100 may receive a signal corresponding to the situation from the display apparatus 200. In this case, as illustrated, the user terminal apparatus 100 may display the QWERTY keyboard 912 on the touch screen 911 provided in the second inputter 910. In such a case, the display apparatus 200 may control such that the QWERTY keyboard 921 displayed on the screen disappears as the display apparatus 200 transmits the signal corresponding to the situation to the user terminal apparatus 100, or in response to receiving a request signal regarding the qwerty keyboard 921 displayed on the screen from the user terminal apparatus 100.

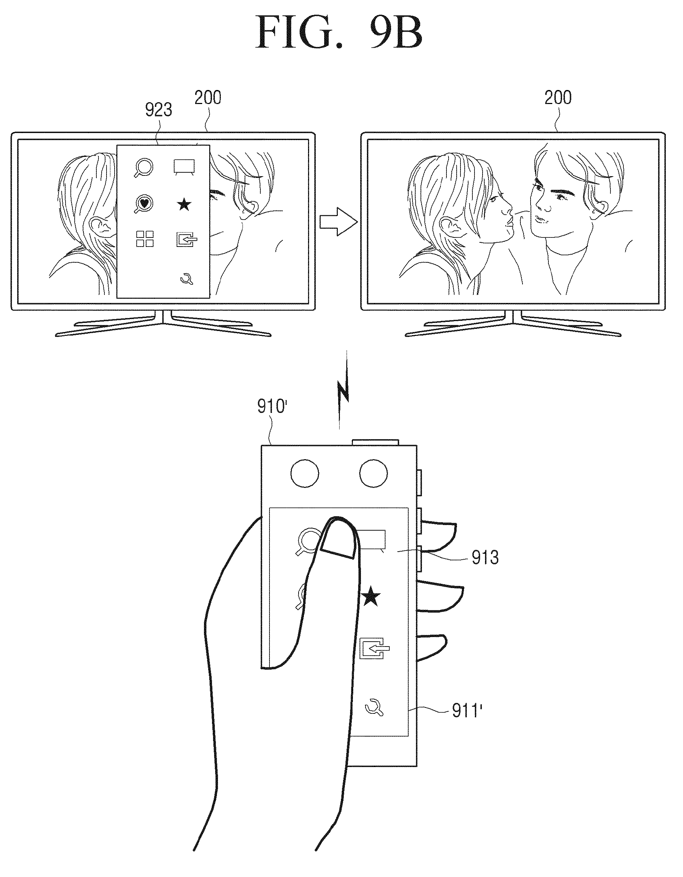

In another example, as illustrated in FIG. 9B, with the display apparatus 200 displaying a menu screen 923 for inputting characters, the user terminal apparatus 100 may receive a signal corresponding to the situation from the display apparatus 200. In such a case, the user terminal apparatus 100 may display the menu screen 913 on the touch screen 911' provided in the second inputter 910' as illustrated. In this case, the display apparatus 200 may control such that the menu screen 923 displayed on the screen disappears as the display apparatus 200 transmits the signal corresponding to the situation to the user terminal apparatus 100, or in response to receiving a request signal regarding the menu screen 923 displayed on the screen from the user terminal apparatus 100.

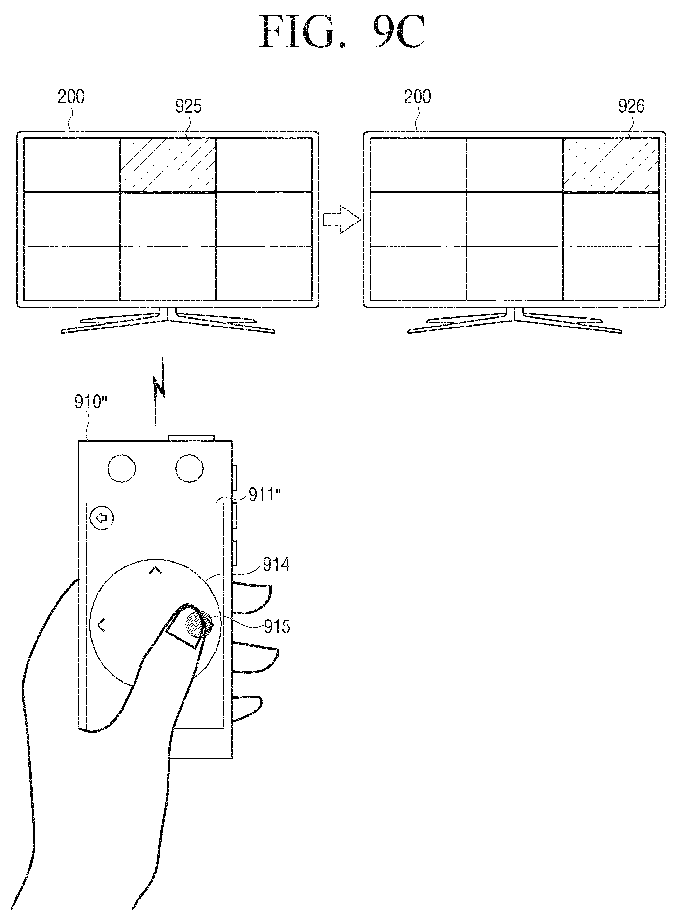

In another example, as illustrated in FIG. 9C, with a UI screen where menu navigation is possible being displayed on the display apparatus 200, the user terminal apparatus 100 may receive a signal corresponding to the situation from the display apparatus 200. In such a case, the user terminal apparatus 100 may provide a navigation GUI 914 where menu navigation is possible on the screen. Herein, the navigation GUI may be a four direction menu button as illustrated, but without limitation, and thus it may be realized in various formats. Meanwhile, the user is enabled to manipulate a location of movement of a highlight GUI (see dark line around elements 925 and 926) for selecting content provided on the screen of the display apparatus 200 through the navigation GUI 914 provided in the user terminal apparatus 100.

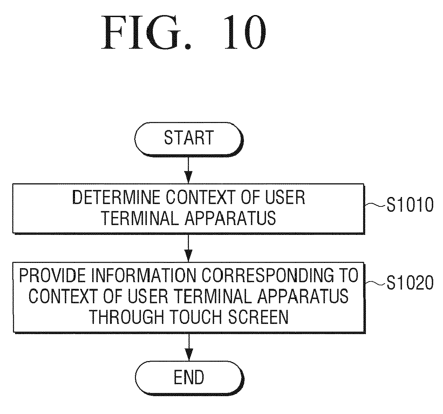

FIG. 10 is a flowchart for explaining a method for controlling the user terminal apparatus 100 according to an embodiment of the present invention.

First of all, in response to a context of the user terminal apparatus 100 being determined (S1010), information corresponding to the context of the user terminal apparatus 100 may be provided through the touch screen (S1020). In this case, the user terminal apparatus may be realized to include a first inputter 120 configured to receive input of a user command for controlling the basic functions of the display apparatus 200 and a second inputter 130 provided on another surface of the user terminal apparatus and configured to display a UI (User Interface) through a touch screen.

Herein, the first inputter 120 may have a touch screen including a basic UI for controlling basic functions of the display apparatus 200.

Furthermore, the first inputter 120 may have a PUI including at least one physical button for controlling the basic functions of the display apparatus 200.

Furthermore, the context of the user terminal apparatus 100 may include at least one situation of a situation where a certain menu is being selected, a situation where a certain signal is being received in the display apparatus 200, and a situation where the user terminal apparatus 100 is being flipped.

The controlling method may further include a step of controlling an activation state of at least one of the first inputter 120 and the second inputter 130 based on the context where the user terminal apparatus 100 is being flipped.

Furthermore, at the step of information corresponding to the context of the user terminal apparatus being provided through the touch screen (S1020), in response to receiving a signal corresponding to the context of the display apparatus 200, information corresponding to the context of the display apparatus 200 may be provided.

Furthermore, at the step of information corresponding to the context of the user terminal apparatus being provided through the touch screen (S1020), at a situation where the display apparatus 200 is displaying a content, or at a situation where additional information on the content is to be displayed or where the display apparatus 200 is to receive input of characters, a UI for inputting characters may be displayed.

Furthermore, at the step of information corresponding to the context of the user terminal apparatus being provided through the touch screen (S1020), a UI screen including at least one GUI for directly replaying at least one content is provided according to a predetermined event, the UI screen sequentially displaying GUIs of predetermined format based on the usage frequency of at least one content.

The controlling method may further include a step of directly replaying a content corresponding to a selected GUI in response to a user manipulation of selecting a GUI being a short press input, and providing a menu related to a content corresponding to the selected GUI in response to a user manipulation of selecting a GUI being a long press input.

Furthermore, the controlling method may further include a step of scrolling a UI screen in a predetermined direction according to a predetermined touch interaction and displaying the same, and additionally displaying at least one GUI not displayed on the UI screen according to a predetermined event on the touch screen.

Meanwhile, the controlling method of the user terminal apparatus 100 according to the aforementioned various embodiments of the present invention may be realized in a program code executable in a computer, and may be provided in each server or device so as to be executable by the processor 140 after being stored in various types of non-transitory computer readable media.

For example, a non-transitory computer readable medium may be provided that stores a program configured to perform a step of determining a context of the user terminal apparatus 100 of the present invention, and a step of providing information corresponding to the context of the user terminal apparatus 100 through the touch screen.

A non-transitory computer readable medium may refer to a computer readable medium capable of storing data semi-permanently, and not for a short period of time like a register, cache, and memory. Specifically, the aforementioned various applications or programs may be stored in a non-transitory computer readable medium such as a CD, DVD, hard disc, blue-ray disc, USB, memory card, and ROM, and be provided.

Furthermore, a program code for performing a controlling method according to the aforementioned various embodiments may be stored in various types of record media. More specifically, such a program code may be stored in various types of terminal-readable record media such as RAM(Random Access Memory), flash memory, ROM(Read Only Memory), EPROM(Erasable Programmable ROM), EEPROM(Electronically Erasable and Programmable ROM), register, hard disk, removable disk, memory card, USB memory, and CD-ROM and the like.,

The foregoing exemplary embodiments and advantages are merely exemplary and are not to be construed as limiting. The present teaching can be readily applied to other types of apparatuses. Also, the description of the exemplary embodiments is intended to be illustrative, and not to limit the scope of the claims, and many alternatives, modifications, and variations will be apparent to those skilled in the art.

Although a few embodiments have been shown and described, it would be appreciated by those skilled in the art that changes may be made in these embodiments without departing from the invention, the scope of which is defined in the claims.

## Claims

1. A user terminal apparatus for controlling a display apparatus, the user terminal apparatus comprising:
a communicator configured to perform communication with the display apparatus;
a first inputter provided on one surface of the user terminal apparatus, and configured to receive input of a user command for controlling a basic function of the display apparatus;
a second inputter provided on another surface of the user terminal apparatus, and configured to display a second surface UI (User Interface) via a touch screen on the another surface; and
a processor configured to provide information corresponding to a terminal context of the user terminal apparatus through the touch screen.

2. The apparatus according to claim 1, wherein the first inputter is provided with another touch screen that includes a basic UI for controlling the basic function of the display apparatus.

3. The apparatus according to any one of claim 1 and 2, wherein the first inputter is provided with a PUI (Physical User Interface) that includes at least one physical button for controlling the basic function of the display apparatus.

4. The apparatus according to any one of claims 1 to 3, wherein the terminal context of the user terminal apparatus includes at least one of a menu situation of a certain menu being selected, a signal situation of a certain signal being received in the display apparatus, and a terminal situation of the user terminal apparatus being flipped.

5. The apparatus according to any one of claims 1 to 4, wherein the processor controls at least one activation state of the first inputter and second inputter based on the terminal context of the user terminal apparatus being flipped.

6. The apparatus according to any one of claims 1 to 5, wherein the processor, in response to receiving a signal corresponding to a display context of the display apparatus, provides information corresponding to the display context of the display apparatus through the touch screen.

7. The apparatus according to claim 6, wherein the processor, in response to being in a content situation of the display apparatus displaying a content, displays additional information on the content through the touch screen, and in response to being in an input situation of the display apparatus to receive input of a character, displays an input UI for inputting the character through the touch screen.

8. The apparatus according to any one of claims 1 to 7, wherein
the processor provides a UI screen that includes at least one GUI (graphical user interface) for directly replaying at least one content according to a predetermined event, and
the UI screen including the GUI having a predetermined format sequentially arranged based on a usage frequency of the at least one content.

9. The apparatus according to claim 8, wherein the processor, in response to the user manipulation of selecting the GUI using a short press input, directly replays the at least one content corresponding to a selected GUI, and in response to user manipulation of selecting the GUI using a long press input, provides a menu related to the at least one content corresponding to the selected GUI.

10. The apparatus according to any one of claim 8 and 9, wherein the processor scrolls the UI screen in a predetermined direction according to a predetermined touch interaction and displays the UI screen, and additionally displays at least one GUI not displayed on the UI screen on the touch screen according to the extra space predetermined event.

11. A control method of a user terminal apparatus for controlling a display apparatus comprising a communicator configured to perform communication with the display apparatus, a first inputter provided on one surface of the user terminal apparatus and configured to receive input of a user command for controlling a basic function of the display apparatus, a second inputter provided on another surface of the user terminal apparatus and configured to display another surface UI (User Interface) through a touch screen, the method comprising:
determining a context of the user terminal apparatus; and
providing information corresponding to the context of the user terminal apparatus through the touch screen.

12. The method according to claim 11, wherein the first inputter is provided with a first inputter touch screen that includes a basic UI for controlling the basic function of the display apparatus.

13. The method according to any one of claim 11 and 12, wherein the first inputter is provided with a PUI (Physical User Interface) that includes at least one physical button for controlling the basic function of the display apparatus.

14. The method according to any one of claims 11 to 13, wherein the context of the user terminal apparatus includes at least one of a menu situation of a certain menu being selected, a signal situation of a certain signal being received in the display apparatus, and a terminal situation of the user terminal apparatus being flipped.

15. The method according to any one of claims 11 to 14, further comprising controlling at least one activation state of the first inputter and second inputter based on the context of the user terminal apparatus being flipped.
